# EUROPÄISCHE PATENTSCHRIFT

(11) **EP 0 903 666 B1**
(45) Veröffentlichungstag und Bekanntmachung des Hinweises auf die Patenterteilung: **20.04.2005**
(21) Anmeldenummer: 98440186.9
(22) Anmeldetag: 28.08.1998
(51) Int. Cl.: G06F 9/445

(54) **Verfahren zum Verteilen von Datenpaketen einer Betriebssoftware**
Method for distributing data packets of an operating system
Procédé pour la distribution de paquets de données d'un système d'exploitation

(30) Priorität: 23.09.1997 DE 19741870
(43) Veröffentlichungstag der Anmeldung: 24.03.1999
(73) Patentinhaber: ALCATEL, 75008 Paris (FR)
(72) Erfinder: Cesar, Bozo, 70806 Kornwestheim (DE); Keil, Klaus, 73730 Esslingen (DE); Riemer, Joachim, 70825 Korntal (DE)
(74) Vertreter: Menzietti, Domenico, Dipl.-Ing

(56) Entgegenhaltungen:
- DE-A- 3 842 289
- US-A- 5 421 009

## Beschreibung

Die Erfindung bezieht sich auf ein Verfahren zum Verteilen von Datenpaketen einer Betriebssoftware nach dem Oberbegriff des Patentanspruchs 1.

In einem Punkt-zu-Mehrpunkt System, insbesondere einem Service-auf-, Abruf System, einem sogenannten Service-on-demand System, ist als Sendeeinrichtung ein Server und sind als Empfangseinrichtungen Dekoder vorgesehen. Die Dekoder sind jeweils als Set-Top Box ausgebildet. Die Betriebssoftware der Set-Top Boxen soll aktualisiert werden, wenn eine neue Version einer Betriebssoftware vorliegt.

Aus dem Artikel "Updating software and configuration data in a distributed communications network", von Carl W. Symborski, aus Proceedings of the Computer Networking Symposium, IEEE Comput. Soc. Press, 1988, Seiten 331-338, ist ein Verfahren zum Verteilen von Datenpaketen einer Betriebssoftware in einem Punkt-zu-Mehrpunkt Verteilsystem bekannt. In einer Empfangseinrichtung werden dazu die folgenden Schritte durchgeführt:
1. Warten bis eine vorbestimmte Zeitspanne abgelaufen ist oder eine Nachricht empfangen wurde, die das Vorhandensein einer möglichen neuen Version der Betriebssoftware mitteilt.
2. Anfrage beim Server, ob eine neue Version vorliegt.
3. Vergleich der vom Server mitgeteilte Version mit der in der Empfangseinrichtung verfügbaren.
4. Bei Übereinstimmung Rücksprung zu Schritt 1.
5. Bei Nicht-Übereinstimmung Anfrage und Bestellung der neuen Version beim Server.
6. Ersetzen der alten Version durch die neue.
7. Speichern der neuen Version.
8. Rücksprung zu Schritt 1.

Bei diesem Verfahren ist somit stets eine Aktion der Empfangseinrichtung verbunden mit einer Anfrage beim Server notwendig, um die neue Version der Betriebssoftware zu erhalten. Bei einer Vielzahl von Empfangseinrichtungen muß jede Empfangseinrichtung für sich die neue Version bestellen. Die neue Version, die in der Regel für alle Empfangseinrichtungen gleich ist, wird aufgrund der Struktur des Verteilsystems mehrmals von der Sendeeinrichtung zu allen Empfangseinrichtungen übertragen. Bei z.B. 500 Empfangseinrichtungen, muß die Sendeeinrichtung die neue Version 500 mal zu den Empfangseinrichtungen übertragen, für jede Empfangseinrichtung extra. Dies erfordert einen gewissen zeitlichen Aufwand. Die Übertragung von weiteren Informationen ist somit für eine gewissen Zeitspanne, zumindest in einem vorgegebenen Frequenzbereich unnötig blockiert.

Aus dem Artikel "Set-top box control software: a key component in digital video", von K. Rath und J. W. Wendorf, aus Philips Journal of Research (1996), vol. 50, no. 1-2, Seiten 185-199, ist ein Verfahren zum Verteilen von Datenpaketen einer Betriebssoftware in einem Punkt-zu-Mehrpunkt System bekannt, bei dem eine als Set-Top Box ausgebildete Empfangseinrichtung eine neue Version einer Betriebssoftware telemetrisch über ein Netzwerk erhält, indem die Set-Top Box eine Anfrage zum Server aussendet oder auf einer periodischen Basis die neue Version vom Server erhält. Ersteres entspricht im wesentlichen dem Verfahren wie oben beschrieben. Letzteres bedeutet den Aufbau einer individuellen Verbindung zwischen dem Server und einer einzelner Set-top Box, wodurch zwar das aktive Anfragen der Set-Top Box nach einer neuen Version entfällt, aber die Mehrfachübertragung der gleichen Information nicht verhindert wird.

Es ist deshalb eine Aufgabe der Erfindung ein Verfahren zur Verfügung zu stellen, daß die Aktualisierung der Betriebssoftware auf technisch einfachere Art und Weise durchführen kann.

Erfindungsgemäß wird diese Aufgabe durch ein Verfahren nach dem Patentanspruch 1 gelöst. Das Verfahren ist insbesondere dadurch gekennzeichnet, daß durch eine Vorabinformation in Form eines Ankündigungssignals, die im Broadcast-Verfahren an alle Empfangseinrichtungen versendet wird, die Empfangseinrichtungen auf die anschließende Übertragung der aktuellen Version einer Betriebssoftware aufmerksam gemacht werden, woraufhin sie sich auf den Empfang der neuen Version vorbereiten können. Die Übertragung der neuen, aktuellen Version erfolgt ebenfalls im Broadcast-Verfahren und im Idealfall nur einmal. Sollten einzelne Empfangseinrichtungen die Vorabinformation nicht erhalten haben, so kann das Verfahren beispielsweise zu einem späteren Zeitpunkt automatisch wiederholt werden oder die verbliebenen Empfangseinrichtungen können durch eine Anfrage beim Server die neue Version separat bestellen. Die Übertragungszeit wird somit im Idealfall gegenüber der herkömmlichen Übertragungszeit um einen Faktor verkürzt, der der Anzahl der vorhandenen Empfangseinrichtugen entspricht, bei 500 Empfangseinrichtungen also um den Faktor 500. Sollten z.B. 10% der Empfangseinrichtungen die Vorabinformation nicht erhalten haben, so tritt immerhin eine Zeitverkürzung um den Faktor 250 ( bei automatischer Wiederholung ) bzw. ca. 100 ( bei separaten Anfragen ) auf.

Vorteilhafte Ausgestaltungen sind den abhängigen Patentansprüchen zu entnehmen.

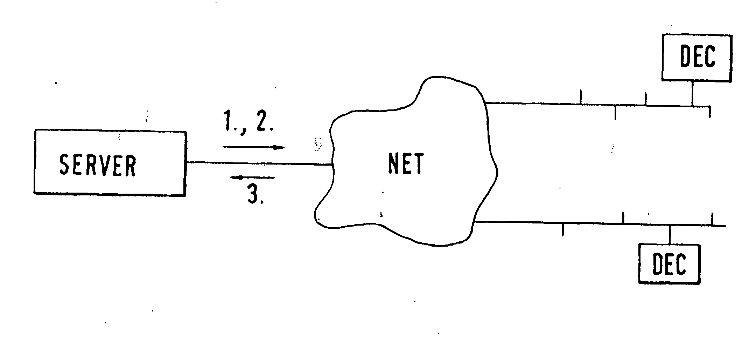

Im folgenden wird die Erfindung anhand eines Ausführungsbeispiels unter Zuhilfenahme einer Figur erläutert. Die Figur zeigt eine schematische Darstellung eines erfindungsgemäßen Punkt-zu-Mehrpunkt Systems zur Durchführung des erfindungsgemäßen Verfahrens zum Verteilen von Datenpaketen einer Betriebssoftware.

Das Punkt-zu-Mehrpunkt Systems SYS beinhaltet eine Sendeeinrichtung SERVER, ein Netzwerk NET und eine Vielzahl von Empfangseinrichtungen DEC.

Das Punkt-zu-Mehrpunkt System ist z.B. als ein Service-auf-Abruf System, ein sogenanntes Service-on-demand System ausgebildet. Die Sendeeinrichtung SERVER beinhaltet dazu einen Server, der über das Netzwerk NET mit den als Dekodern ausgebildeten Empfangseinrichtungen DEC verbunden ist. Das Punkt-zu-Mehrpunkt System stellt einen Vorwärtskanal und einen Rückkanal zur Verfügung. Über den Rückkanal, der z.B. als schmalbandiger Kanal ausgebildet ist, können Kunden von ihren Dekodern aus über das Netzwerk NET Informationen zum Server übertragen. Die Informationen sind z.B. Abrufsignale mittels derer beispielsweise ein Videofilm bestellt wird, der dann über den Vorwärtskanal, der z.B. breitbandig ausgebildet ist, vom Server im Broadcast-Verfahren zu allen Dekodern oder zu einer Gruppe von Dekodern in einem von der Topologie des Netzes abhängigen Teilbereich übertragen wird. Eine Zugangsberechtigung, z.B. durch Vergabe eines Schlüssels für jede Übertragung, ermöglicht es, daß nur derjenige Dekoder, von dem aus der Videofilm bestellt wurde, die Berechtigung und die Fähigkeit hat, den übertragenen Videofilm zu empfangen.

Die Dekoder sind beispielsweise jeweils als Set-Top Box ausgebildet. Jede Set-Top Box hat eine Betriebssoftware mittels derer sie arbeitet. Die Betriebssoftware dient beispielsweise dazu, das vom Server ausgestrahlte Menu zur Auswahl von Videofilmen und dergleichen zu empfangen und zu verarbeiten. Von Zeit zu Zeit wird die Betriebssoftware erweitert und aktualisiert; verändert, um systematische Fehler zu entfernen. Jede Set-Top Box benötigt dann einen "Update" ihrer Betriebssoftware. Eine neue Version der Betriebssoftware muß auf die Set-Top Box überspielt werden. Dies erfolgt durch einen "Download" der neuen Version vom Server zu den Set-Top Boxen. Die neue Version oder, wenn möglich, nur die Veränderungen der neuen Version gegenüber der alten, werden vom Server über das Netzwerk NET in Form von Datenpaketen zu den Set-Top Boxen übertragen. Die Betriebssoftware ist für alle Set-Top Boxen in der Regel diegleiche, so daß im Idealfall ein "Download" ausreicht, um allen Set-Top Boxen die nötigen Datenpakete der neuen Version zu übertragen.

Das Verfahren zum Verteilen der Datenpaketen der Betriebssoftware wird nacheinander in den folgenden Schritte durchgeführt :
1. Von der Sendeeinrichtung SERVER, die den Server beinhaltet, wird ein Ankündigungssignal, beinhaltend die Information, daß nachfolgend zumindest ein Teil der Betriebssoftware der Set-Top Boxen ausgesendet wird, an alle Empfangseinrichtungen DEC, die die Set-Top Boxen beinhalten, gleichzeitig ausgesandt.
2. Von der Sendeeinrichtung SERVER, die den Server beinhaltet, wird der zumindest eine Teil der Betriebssoftware der Set-Top Boxen in Form von Datenpaketen an alle Empfangseinrichtungen DEC gleichzeitig ausgesandt.

Durch den ersten Schritt werden somit alle mit dem Netzwerk NET verbundenen Set-Top Boxen darüber informiert, daß in Kürze die neue Version oder die Veränderungen der neuen Version gegenüber der alten vom Server ausgesendet werden. Jede Set-Top Box hat damit genügend Zeit sich auf den Empfang der neuen Software vorzubereiten, indem die Set-Top Box z.B. eine Initialisierungsphase durchläuft, in der diverse Checks durchgeführt werden und ein Zwischenspeicherbereich freigeschaltet wird, um die zumTeil speicherintensive Betriebssoftware zwischenzuspeichern und anschließend zu laden. Das Ankündigungssignal wird von allen Set-Top Boxen empfangen, da im Gegensatz zu einer Adreßangabe im sogenannten Header eines Datenpakets, die zur gezielten Auswahl einer bestimmten Set-Top Box dient, eine sogenannte Default-Adresse verwendet wird, z.B. XXXXXXXX, die von allen Set-Top Boxen empfangen werden kann.

Im zweiten Schritt werden die Datenpakete der neuen Betriebssoftware vom Server im Broadcast-Verfahren zu allen Set-Top Boxen übertragen. Dazu wird ebenfalls die Default-Adresse verwendet. Alle Set-Top Boxen können die übertragenen Datenpakete empfangen. Ein einmaliges Übertragen der Datenpakete reicht somit aus, um die neue Version der Bertriebssoftware zu allen durch das Ankündigungssignal vorbereitete Set-Top Boxen zu überspielen. Im Idealfall werden somit durch einmaliges Überspielen der neuen Betriebssoftware die Betriebssoftware aller Set-Top Boxen upgedated.

Das Ankündigungssignal kann die Information beinhaltet, welche Version der Betriebssoftware vom Server ausgesendet wird und wieviel Speicherkapazität benötigt wird. Dadurch werden die Set-Top Boxen vorzeitig in die Lage versetzt, zu prüfen, ob die in Kürze übertragenden Datenpakete empfangen werden sollen oder nicht. Beispielsweise hat eine Set-Top Box bereits die neue Version der Betriebssoftware; z.B. über eine vorzeitige Anfrage, über eine PCMCIA-Karte oder auf andere Weise. Dann wäre der Empfang der neue Version und die Vorbereitung darauf unnötig. Durch die Angabe der benötigten Speicherkapazität wird die Set-Top Box in die Lage versetzt, zu prüfen, ob genügend Speicherplatz vorhanden ist, um die neuste Version zu empfangen und für den Fall, daß dem so ist, einen entsprechend großen Speicherbereich freizuhalten und für die neue Version zu reservieren.

Die als Set-Top Boxen ausgebildeten Empfangseinrichtungen DEC können zwischen Schritt 1 und Schritt 2 des Verfahrens zum Verteilen der Datenpaketen der neuen Betriebssoftware die Version dieser Betriebssoftware zwischenspeichern und mit der in der jeweiligen Set-Top Box verfügbaren Version vergleichen sowie bei Übereinstimmung den Empfang der unter Schritt 2 ausgesendeten Datenpakete unterbinden.

Die als Set-Top Boxen ausgebildeten Empfangseinrichtungen DEC quittieren nur den Erhalt des letzten von der Sendeeinrichtung SERVER ausgesendeten und zu dem zumindest einen Teil der Betriebssoftware gehörigen Datenpakets. Dies hat den Vorteil, daß die Übertragung der Datenpakete ungestört von den Quittierungen der Set-Top Boxen vonstatten gehen kann. Eine Wiederholung der Übertragung einzelner Datenpakete für einzelne Set-Top Boxen ist aus Gründen der sonst auftretenden zeitlichen Verzögerungen nicht vorgesehen. Empfängt eine Set-Top Box aus irgendwelchen Gründen einzelne Datenpakete nicht, so muß sie auf eine erneute Überspielung einer kompletten Version warten, sofern dies vorgesehen ist, oder nach der neuen Version beim Server anfragen, der dann der entsprechenden Set-Top Box eine komplette Version separat übersendet.

Die Quittierungssignale der Set-Top Boxen beinhalten eine Information zur Identifikation der Set-Top Boxen. Die Information kann beispielsweise durch die Angabe der Adresse der Set-Top Box erfolgen. Der Server hat somit die Möglichkeit festzustellen, welche Set-Top Boxen die ausgesendeten Datenpakete empfangen haben und welche nicht. Zu diesem Zweck speichert der Server z.B. die Adressen derjenigen Set-Top Boxen, die den Erhalt der Datenpakete quittiert haben, in einer Liste ab. Die Abspeicherung der Adressen kann beispielsweise durch direkte Abspeicherung der Adressen in einem separaten Speicherbereich erfolgen oder durch einen Vermerk an den jeweiligen Adressen der Set-Top Boxen, wenn alle bereits in einer Liste abgespeichert sind. Durch Vergleich der empfangenen Quittierungen mit der Anzahl der verfügbaren Set-Top Boxen kann der Server ermitteln wievielen Set-Top Boxen die neue Version erfolgreich übertragen wurde. Daraus läßt sich eine Erfolgsquote ermitteln, z.B. 80%. Der Server kann aufgrund der Quote entscheiden, ob er die Übertragung mit vorherigem Ankündigungssignal zu einem späterem Zeitpunkt wiederholt oder nicht. Des weiteren läßt sich durch die Adreßangabe feststellen, ob Übertragungsfehler in örtlich begrenzten Bereiche vorliegen, z.B. im Fall keiner Quittierung derjenigen Set-Top Boxen, die an einen von der Topologie des Netzes abhängigen Teilbereich angeschlossen sind.

## Patentansprüche

1. Verfahren zum Verteilen von Datenpaketen einer Betriebssoftware, in einem Punkt-zu-Mehrpunkt System, von einer Sendeeinrichtung ( SERVER ) zu mehreren Empfangseinrichtungen ( DEC ),
**dadurch gekennzeichnet,**
**daß** nacheinander folgende Schritte durchgeführt werden :
1. Von der Sendeeinrichtung ( SERVER ) wird ein Ankündigungssignal, beinhaltend die Information, daß nachfolgend zumindest ein Teil einer Betriebssoftware ausgesendet wird, an alle Empfangseinrichtungen ( DEC ) gleichzeitig ausgesandt;
2. Von der Sendeeinrichtung ( SERVER ) wird der zumindest eine Teil der Betriebssoftware in Form von Datenpaketen an alle Empfangseinrichtungen ( DEC ) gleichzeitig ausgesandt.

2. Verfahren nach Anspruch 1, **dadurch gekennzeichnet, daß** das Ankündigungssignal die Information beinhaltet, welche Version der Betriebssoftware ausgesendet wird.

3. Verfahren nach Anspruch 2, **dadurch gekennzeichnet, daß** die Empfangseinrichtungen ( DEC ) zwischen Schritt 1 und Schritt 2 die Version der Betriebssoftware des Ankündigungssignals zwischenspeichern und mit der in der jeweiligen Empfangseinrichtung ( DEC ) verfügbaren Version vergleichen sowie bei Übereinstimmung den Empfang der unter Schritt 2 ausgesendeten Datenpakete unterbinden.

4. Verfahren nach einem der vorhergehenden Ansprüche, **dadurch gekennzeichnet, daß** die Empfangseinrichtungen ( DEC ) nur den Erhalt des letzten von der Sendeeinrichtung ( SERVER ) ausgesendeten und zu dem zumindest einen Teil der Betriebssoftware gehörigen Datenpakets quittieren.

5. Verfahren nach Anspruch 4, **dadurch gekennzeichnet, daß** die Quittierungssignale der Empfangseinrichtungen ( DEC ) eine Information zur Identifikation der Empfangseinrichtungen ( DEC ) beinhalten, und daß die Sendeeinrichtung ( SERVER ) diejenigen Empfangseinrichtungen ( DEC ), die den Erhalt der Datenpakete quittiert haben in einer Liste abspeichert, um festzuhalten, welche Empfangseinrichtung ( DEC ) die ausgesendeten Datenpakete empfangen hat und welche nicht.

6. Verfahren nach einem der vorhergehenden Ansprüche, **dadurch gekennzeichnet, daß** das Punkt-zu-Mehrpunkt System ein Service-auf-Abruf System mit einem Server als Sendeeinrichtung ( SERVER ) und Dekodern als Empfangseinrichtungen ( DEC ) ist.

7. Verfahren nach Anspruch 6, **dadurch gekennzeichnet, daß** die Dekoder jeweils als Set-Top Box ausgebildet sind und die ausgesendeten Datenpakete für die Aktualisierung der Betriebssoftware der Set-Top Boxen bestimmt sind.

8. Sendeeinrichtung (SERVER) zur Verteilung von Datenpaketen einer Betriebssoftware, in einem Punkt-zu-Mehrpunkt System mit einer Sendeeinrichtung ( SERVER ) und mehreren Empfangseinrichtungen ( DEC ), **dadurch gekennzeichnet,**
**daß** die Sendeeinrichtung ( SERVER ) derart ausgestaltet ist,
1. ein Ankündigungssignal, beinhaltend die Information, daß nachfolgend zumindest ein Teil einer Betriebssoftware ausgesendet wird, an alle Empfangseinrichtungen ( DEC ) gleichzeitig auszusenden; und
2. den zumindest einen Teil der Betriebssoftware in Form von Datenpaketen an alle Empfangseinrichtungen ( DEC ) gleichzeitig auszusenden.

9. Empfangseinrichtung ( DEC ) zum Empfang von Datenpaketen einer Betriebssoftware, ausgesendet in einem Punkt-zu-Mehrpunkt System mit einer Sendeeinrichtung ( SERVER ) und mehreren Empfangseinrichtungen ( DEC ), **dadurch gekennzeichnet,**
**daß** die Empfangseinrichtung ( DEC ) derart ausgestaltet ist,
1. ein Ankündigungssignal, beinhaltend die Information, daß nachfolgend zumindest ein Teil einer Betriebssoftware ausgesendet wird, zu empfangen;
2. die Version dieser Betriebssoftware zwischenzuspeichern und mit der in der Empfangseinrichtung ( DEC ) verfügbaren Version zu vergleichen, und
3. im Falle einer Übereinstimmung den Empfang des zumindest einen, in Form von Datenpaketen ausgesandten Teil der Betriebssoftware zu unterbinden.

## Claims

1. A method of distributing data packets of system software in a point-to-multipoint system (SYS) from a send unit (SERVER) to a plurality of receive units (DEC),
**characterized in**
**that** the following steps are taken one after the other:
1. An announce signal containing the information that the system software or part thereof will subsequently be transmitted is transmitted from the send unit (SERVER) to all receive units (DEC) simultaneously.
2. The system software or part thereof is transmitted in the form of data packets from the send unit (SERVER) to all receive units (DEC) simultaneously.

2. A method as claimed in claim 1, **characterized in that** the announce signal contains information as to which version of the system software will be transmitted.

3. A method as claimed in claim 2, **characterized in that** between steps 1 and 2, the receive units (DEC) buffer the version of the system software identified in the announce signal, compare said version with the version available in the respective receive unit (DEC), and, if the two versions are identical, inhibit the reception of the data packets transmitted in step 2.

4. A method as claimed in any one of the preceding claims, **characterized in that** the receive units (DEC) acknowledge only the receipt of the last data packet transmitted by the send unit (SERVER) and belonging to the system software or part thereof.

5. A method as claimed in claim 4, **characterized in that** the acknowledge signals from the receive units (DEC) contain information identifying the receive units (DEC), and that the send unit (SERVER) stores in a list information identifying those receive units (DEC) which have acknowledged the receipt of the data packets, in order to record which receive unit (DEC) has received the transmitted data packets and which has not.

6. A method as claimed in any one of the preceding claims, **characterized in that** the point-to-multipoint system is a service-on-demand system comprising a server as the send unit (SERVER) and decoders as the receive unit (DEC).

7. A method as claimed in claim 6, **characterized in that** the decoders are designed as set-top boxes, and that the transmitted data packets serve to update the system software of the set-top boxes.

8. A send unit (SERVER) for distributing data packets of system software in a point-to-multipoint system comprising a send unit (SERVER) and a plurality of receive units (DEC),
**characterized in**
**that** the send unit (SERVER) is adapted
1. to transmit to all receive units (DEC) simultaneously an announce signal containing the information that the system software or part thereof will subsequently be transmitted, and
2. to transmit the system software or part thereof in the form of data packets to all receive units (DEC) simultaneously.

9. A receive unit (DEC) for receiving data packets of system software transmitted in a point-to-multipoint system comprising a send unit (SERVER) and a plurality of receive units (DEC),
**characterized in**
**that** the receive unit (DEC) is adapted
1. to receive an announce signal containing the information that system software or part thereof will subsequently be transmitted,
2. to temporarily store the version of this system software and compare it with the version available in the receive unit (DEC), and
3. if the two versions are identical, to inhibit the reception of the system software or part thereof transmitted in the form of data packets.

## Revendications

1. Procédé pour distribuer des paquets de données d'un système d'exploitation, dans un système point à multipoint, d'une installation d'émission (SERVER) à plusieurs installations de réception (DEC),
**caractérisé en ce que** sont exécutées l'une après l'autre les étapes suivantes :
1. L'installation d'émission (SERVER) envoie simultanément à toutes les installations de réception (DEC) un signal de pré-avertissement contenant l'information que sera envoyée par la suite au moins une partie d'un système d'exploitation.
2. L'installation d'émission (SERVER) envoie simultanément à toutes les installations de réception (DEC) la au moins une partie du système d'exploitation sous la forme de paquets de données.

2. Procédé selon la revendication 1, **caractérisé en ce que** le signal de pré-avertissement contient l'information sur la version du système d'exploitation qui sera envoyée.

3. Procédé selon la revendication 2, **caractérisé en ce que**, entre l'étape 1 et l'étape 2, les installations de réception (DEC) mémorisent provisoirement la version du système d'exploitation du signal de pré-avertissement et la comparent à la version disponible dans l'installation de réception respective (DEC) et **en ce que**, en cas d'identité, elles cessent la réception des paquets de données envoyés à l'étape 2.

4. Procédé selon l'une quelconque des revendications précédentes, **caractérisé en ce que** les installations de réception (DEC) n'accusent que la réception du dernier paquet de données envoyé par l'installation d'émission (SERVER) et associé à la au moins une partie du système d'exploitation.

5. Procédé selon la revendication 4, **caractérisé en ce que** les signaux d'accusé de réception des installations de réception (DEC) contiennent une information destinée à identifier les installations de réception (DEC) et **en ce que** l'installation d'émission (SERVER) enregistre dans une liste les installations de réception (DEC) qui ont accusé la réception des paquets de données afin de déterminer les installations de réception (DEC) qui ont reçu les paquets de données envoyés et celles qui ne les ont pas reçus.

6. Procédé selon l'une quelconque des revendications précédentes, **caractérisé en ce que** le système point à multipoint est un système de service sur demande avec un serveur servant d'installation d'émission (SERVER) et des décodeurs servant d'installations de réception (DEC).

7. Procédé selon la revendication 6, **caractérisé en ce que** les décodeurs sont conçus sous forme d'un boîtier adaptateur et que les paquets de données émis sont destinés à la mise à jour du système d'exploitation des boîtiers adaptateurs.

8. Installation d'émission (SERVER), destinée à distribuer des paquets de données d'un système d'exploitation dans un système point à multipoint avec une installation d'émission (SERVER) et plusieurs installations de réception (DEC), **caractérisée en ce que** l'installation d'émission (SERVER) est agencée de manière
1. à envoyer simultanément à toutes les installations de réception (DEC) un signal de pré-avertissement contenant l'information que sera envoyée par la suite au moins une partie d'un système d'exploitation ; et
2. à envoyer simultanément à toutes les installations de réception (DEC) la au moins une partie du système d'exploitation sous forme de paquets de données.

9. Installation de réception (DEC), destinée à recevoir des paquets de données d'un système d'exploitation émis dans un système point à multipoint avec une installation d'émission (SERVER) et plusieurs installations de réception (DEC), **caractérisée en ce que** l'installation de réception (DEC) est agencée de manière
1. à recevoir un signal de pré-avertissement contenant l'information que sera envoyée par la suite au moins une partie d'un système d'exploitation ;
2. à mémoriser provisoirement la version de ce système d'exploitation et à la comparer à la version disponible dans l'installation de réception (DEC) ; et,
3. en cas d'identité, à cesser la réception de la au moins une partie du système d'exploitation envoyée sous forme de paquets de données.
